# EUROPEAN PATENT APPLICATION

(11) **EP 0 773 671 A2**
(43) Date of publication of application: **14.05.1997**
(21) Application number: 96308071.8
(22) Date of filing: 06.11.1996
(51) Int. Cl.: H04N 5/12

(54) **Video display apparatus and method for synchronising a clock signal with the horizontal frequency of an input signal**

(30) Priority: 09.11.1995 JP 291521/95
(71) Applicant: SONY CORPORATION, Tokyo (JP)
(72) Inventor: Kimoto, Masanobu, Shinagawa-ku, Tokyo (JP); Ouchiyama, Motoki, Shinagawa-ku, Tokyo (JP)
(74) Representative: Ayers, Martyn Lewis Stanley

(57) **Abstract**

An apparatus for controlling a horizontal oscillation in a multiscan video display apparatus is provided with horizontal oscillator circuitry for generating a horizontal oscillation, an input terminal for receiving input video signals having a plurality of horizontal synchronization signals of different frequencies, a memory for storing a plurality of preset frequency control data corresponding to each of the plurality of horizontal synchronization signals of different frequencies, detecting circuitry for detecting a frequency of one of the plurality of horizontal synchronization signals, and supplying circuitry for supplying one of the plurality of preset frequency control data corresponding to the frequency detected by the detecting circuitry to the horizontal oscillator circuitry, thereby generating said horizontal oscillation. Also, a method for controlling a frequency of a horizontal oscillator in a multiscan display apparatus having as input video signals having a plurality of horizontal synchronization signals of different frequencies is provided including the steps of, storing a plurality of preset frequency control data corresponding to each of the plurality of horizontal synchronization signals of different frequencies, detecting a change in frequency of said horizontal synchronization signal, and supplying the preset frequency control data corresponding to the changed frequency to the horizontal oscillator, thereby controlling the frequency of the horizontal oscillator.

## Description

The present invention relates to a video display apparatus and method for use with, for example, a multiscan computer monitor. Multiscan monitors are designed to operate with input video signals having different horizontal synchronization frequencies, for example, 30 Khz to 90 Khz.

A multiscan monitor with such a wide input frequency range must generate an internal clock signal based on these horizontal synchronizing frequencies. To accomplish this task a Phase Lock Loop ("PLL") circuit is often used for generating a clock signal synchronized to the input horizontal frequency. Since the input video signals are in a wide frequency band, these PLL circuits take a long time to accomplish this synchronization or "locking" operation.

Generally, the PLL circuit generates a signal based on the phase difference between the clock oscillation signal and the input signal, and uses this generated signal to change the oscillation frequency of an oscillator. This design limits the frequency rate of change of the oscillator because, when the input frequency is significantly changed it takes considerable time for the PLL circuit to lock the clock signal to the new input frequency, thereby leading to lengthy stabilization times.

It is an object of the present invention to provide a video display apparatus and method for synchronizing a clock signal with a variable input horizontal frequency signal in a reduced time, thereby allowing for faster processing and displaying of an image synchronized with the input horizontal frequency on a display screen of the video display apparatus.

It is an optional feature of the present invention to set the initial frequency of a Voltage Control Oscillator ("VCO") based on stored preset data optimized to a wide range of input frequencies. This aspect makes the VCO frequency approximately the input frequency at the outset, reducing the difference between the input and clock frequencies, thereby reducing the synchronization time of the apparatus.

According to a first aspect of the present invention, there is provided an apparatus for controlling a horizontal oscillation in a multiscan video display apparatus comprising:
horizontal oscillator means for generating a horizontal oscillation;
input terminal means for receiving input video signals having any one of a plurality of horizontal synchronization signals of different frequencies;
memory means for storing a plurality of preset frequency control data corresponding to each of said plurality of horizontal synchronization signals of different frequencies;
detecting means for detecting a frequency of the horizontal synchronization signals; and
supplying means for supplying one of said plurality of preset frequency control data corresponding to said frequency detected by said detecting means to said horizontal oscillator means, thereby generating said horizontal oscillation.

According to a second aspect of the present invention, there is provided a method for controlling a frequency of a horizontal oscillator in a multiscan display apparatus having as input video signals having any one of a plurality of horizontal synchronization signals of different frequencies comprising the steps of:
storing a plurality of preset frequency control data corresponding to each of said plurality of horizontal synchronization signals of different frequencies;
detecting a change in frequency of said horizontal synchronization signal; and
supplying the preset frequency control data corresponding to said changed frequency to said horizontal oscillator, thereby controlling the frequency of said horizontal oscillator.

The invention will be further described by way of non-limitative example with reference to the accompanying drawings, in which:-
Fig. 1 is an schematic in block diagram form of a video monitor according to an embodiment of the present invention; and
FIG. 2 is a flowchart showing the processing steps used to control a PLL circuit according to an embodiment of the present invention.

While this invention is susceptible of embodiment in many different forms, there is shown in the drawings and will herein be described in detail specific embodiments, with the understanding that the present disclosure is to be considered as an example of the principles of the invention and not intended to limit the invention to the specific embodiments shown and described. In the description below, like reference numerals are used to describe the same, similar or corresponding parts in the several views of the drawing.

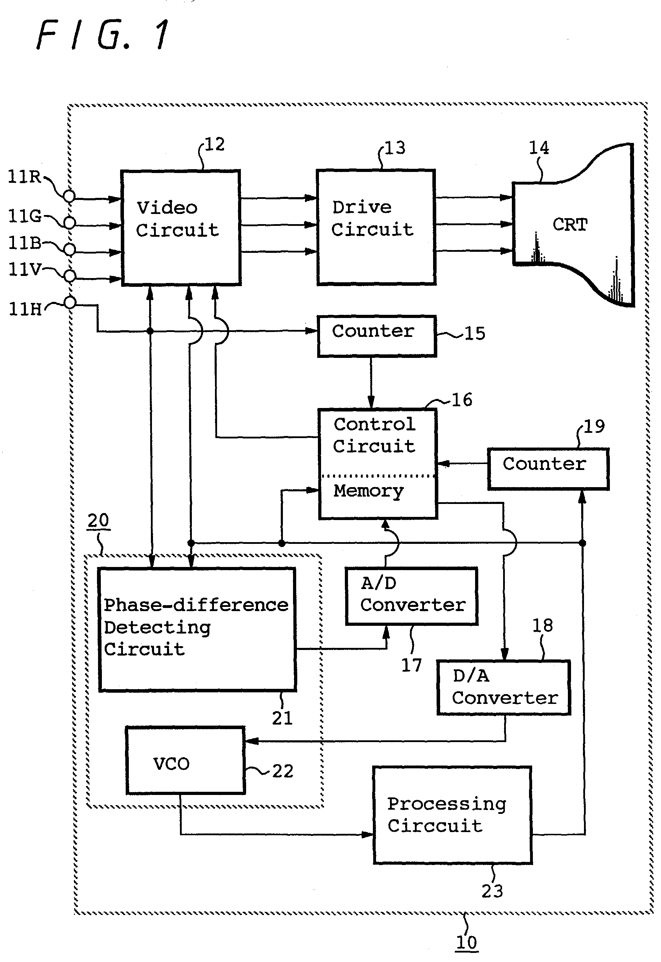

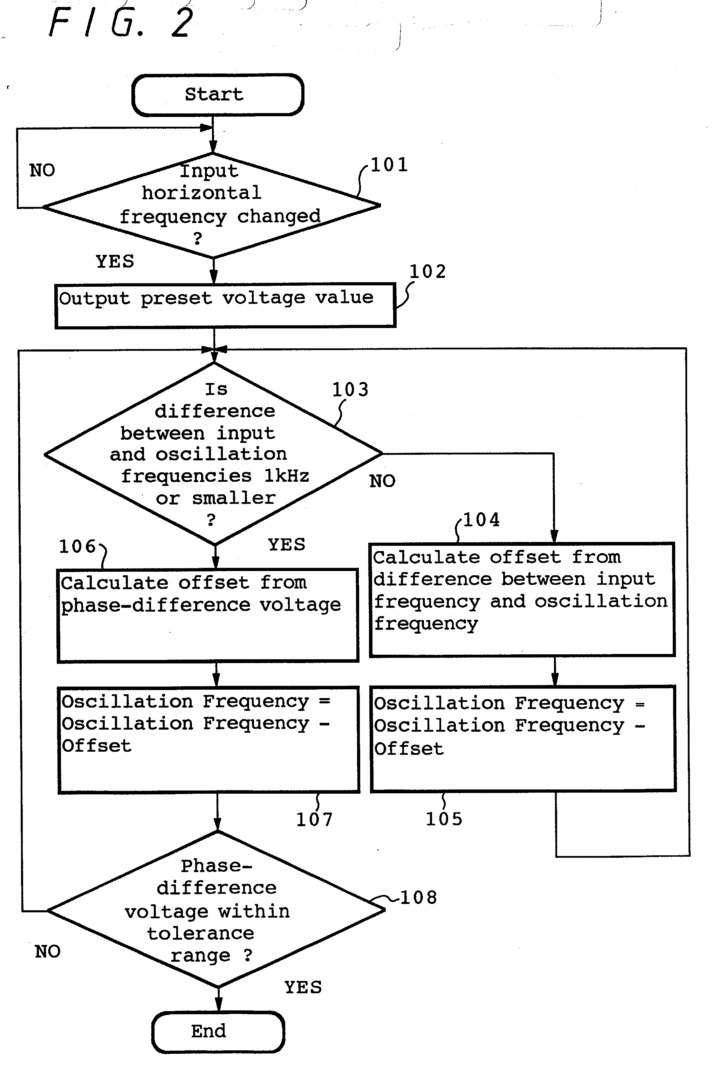

Turning now to Figs. 1 and 2, the present invention is used in a multiscan monitor, which is a monitor capable of processing and displaying an input video signal having one of several different horizontal frequencies. An example of a range of input video signal frequencies is from 30 KHz to 90 Khz.

A computer monitor 10 according to an embodiment of the present invention includes video signal input terminals 11R, 11G, 11B respectively supplied with video signals by a computer (not shown) representing the three primary colors, a red video signal R, a green video signal G and a blue video signal B. Also, supplied by a computer and separated from the video signals, the computer monitor 10 includes a horizontal synchronization signal input terminal 11H and a vertical synchronization signal input terminal 11V. The red video signal R, the green video signal G, and the blue video signal B, are supplied to a video circuit 12. The video circuit 12 receives and processes the R, G, B video signals at a timing synchronized with the horizontal and vertical synchronization signals under the control of a control circuit 16 which is the system controller of the monitor 10. The control circuit 16 is a microcomputer of the kind generally including a CPU and RAM and ROM memories.

The video circuit 12 supplies the processed R, G, B video signals to a drive circuit 13. The drive circuit 13 drives a cathode-ray tube ("CRT") 14 for displaying an image on the screen of the CRT 14. The deflection system of the monitor 10 is not shown.

In this embodiment, a phase locked loop ("PLL") circuit, including a horizontal oscillator circuit 20 and peripheral circuits, is supplied with the horizontal synchronization signal obtained at the horizontal synchronization signal input terminal llH, generating a clock signal synchronized with the frequency of the horizontal synchronization signal.

An arrangement of the PLL circuit will be described next. A frequency counter 15 is supplied with the horizontal synchronization signal from the input terminal llH to produce as output the detected frequency of the horizontal synchronization signal. The output from the frequency counter 15 is supplied to the control circuit 16.

A phase-difference detecting circuit 21 is provided in the horizontal oscillator circuit 20 and is supplied with two input signals. The first input signal is the horizontal synchronization signal from input terminal llH, and the second input signal is the output from a processing circuit 23 which will be described later. The phase-difference detecting circuit 21 detects the phase difference between its two inputs and supplies a detected phase-difference voltage signal representing the above phase difference to an A/D converter 17. The A/D converter 17 converts the phase-difference voltage signal to digital data and supplies the digital data to the control circuit 16.

The control circuit 16 generates an oscillation control data signal based on the phase-difference data supplied by the phase-difference detecting circuit 21, after A/D conversion by the A/D converter 17, and the data of the detected frequency of the input horizontal synchronization signal from the frequency counter 15. Here, the control circuit 16 has a memory (not shown) to store in advance, preset values for the oscillation control data corresponding to various input horizontal frequencies. The process for generating the oscillation control data by using these preset values will be described later. Next, the control circuit 16 supplies the oscillation control data to a D/A converter 18. The D/A converter 18 converts the oscillation control data into a voltage signal and supplies it to the control voltage input unit (not shown) of the voltage-controlled oscillator ("VCO") 22 provided in the horizontal oscillator circuit 20. The VCO 22 output oscillates at a frequency based on the supplied voltage signal.

The processing circuit 23 is supplied with the VCO 22 output frequency and performs on it processing operations including frequency division. The processing circuit 23 output is supplied to the phase-difference detecting circuit 21, to the video circuit 12, to the control circuit 16 as its clock signal, and again to the control circuit 16 through the frequency counter 19. The frequency counter 19 detects the frequency of the signal output from the processing circuit 23 and supplies data representing this detected frequency to the control circuit 16 as described above.

Next, the processing by the control circuit 16 for generating the oscillation control data will be described. The control circuit 16 generates the oscillation control data based on the phase-difference data from the phase-difference detecting circuit 21 after A/D conversion by the A/D converter 17, and the data representing the detected frequencies by the frequency counters 15, and 19. The processing by the control circuit 16 for generating the oscillation control data is described in the flowchart of Fig. 2. Initially, it is determined in step 101 whether the horizontal frequency of the input video signal detected by the frequency counter 15 has changed. If it has, the processing proceeds to step 102, where the control circuit 16 reads out from its memory the preset value of the oscillation control data corresponding to a value of the newly detected frequency, and supplies this oscillation control data to the D/A converter 18. The D/A converter 18 converts the oscillation control data into a voltage signal and supplies the voltage signal to the VCO 22.

The preset values of the oscillation control data stored in the memory of the control circuit 16 are shown on Table 1 below. Table 1 shows the preset values in the form of voltage values into which the oscillation control data is converted by the D/A converter 18. The memory of the control circuit 16 stores the above voltage values as digital data. The VCO 22 used this embodiment is operated within a range of control voltage from 0V to 5V.

**Table 1**

| Input Horizontal Frequency (kHz) | Voltage Value for VCO (V) |
|---|---|
| 30 | 0.45 |
| 35 | 0.82 |
| 40 | 1.22 |
| 45 | 1.59 |
| 50 | 1.98 |
| 55 | 2.35 |
| 60 | 2.75 |
| 65 | 3.12 |
| 70 | 3.51 |
| 75 | 3.88 |
| 80 | 4.27 |
| 85 | 4.65 |
| 90 | 5.00 |

As shown on Table 1, the preset values are set every 5kHz within the operating range of the monitor 10 of 30kHz to 90kHz. In step 102, the control circuit 16 reads out from its memory the preset value corresponding to the frequency closest to the horizontal frequency of the input video signal detected by the frequency counter 15, and supplies the preset value through the D/A converter 18 to the VCO 22. Next, in step 103 the control circuit 16 compares the data representing the input horizontal frequency with the data representing the oscillation frequency of the PLL circuit, and determines whether the difference is the equivalent to 1kHz or smaller. If it is determined in step 103 that the difference between the frequencies exceeds 1kHz the processing proceeds to step 104. Here, the control circuit 16 calculates an offset value from the difference between the input horizontal frequency and the oscillation frequency of the PLL circuit. Next, in step 105 the control circuit 16 subtracts the calculated offset value from the present oscillation control data to update the value of the oscillation control data, and supplies the voltage signal based on the updated oscillation control data, after D/A conversion by converter 18, to the VCO 22. Then, the processing returns to step 103, and the processing of steps 104, and 105 is repeated until it is determined that the difference between the frequencies is 1kHz or smaller.

If, on the other hand, it is determined in step 103 that the difference between the input horizontal frequency and the oscillation frequency of the PLL circuit is 1kHz or smaller, then the processing proceeds to step 106. Here, the control circuit 16 calculates an offset value based on the phase-difference voltage output from the phase-difference detecting circuit 21, after A/D conversion by the A/D converter 17. Next in step 107 the control circuits 16 subtracts the calculated offset value from the present oscillation control data to update the value of the oscillation control data, and supplies the voltage signal based on the updated oscillation control data to the VCO 22, after D/A conversion by D/A converter 18, to the VCO 22. Finally, in step 108 after supplying the voltage signal based on the updated oscillation control data to the VCO 22, the control circuit 16 determines whether the phase-difference voltage falls within the tolerance range where the PLL circuit succeeds in locking the frequency of the VCO 22 at the new horizontal frequency. If it is determined in step 108 that the difference does not fall within the tolerance range, then the processing returns to step 103, otherwise, the processing ends and the control circuit 16 is put in standby mode until the input horizontal frequency is changed.

According to the monitor 10 of this embodiment, when the horizontal frequency of the input video signal is changed, the preset voltage value corresponding to the newly inputted horizontal frequency is initially supplied to the VCO 22. As a result, even when the oscillation frequency at this time has a different value, it is possible for the horizontal oscillator circuit 20 to rapidly generate the signal having the frequency corresponding to the newly inputted horizontal frequency. Also, since the preset voltage values are set for every 5kHz of the input horizontal frequency range, the difference between the input frequency and the oscillation frequency is a maximum of 2.5KHZ. When the difference between the input frequency and the oscillation frequency becomes 2.5kHz or smaller it is possible for the PLL circuit to lock the oscillation frequency of the VCO 22 to the frequency of the input frequency in a short period of time, thereby even when the previous input horizontal frequency has any value, the time required for stabilizing the loop operation of the PLL circuit becomes substantially the same, and the time required for completely locking the oscillation frequency of the VCO 22 to the input horizontal frequency is drastically reduced.

Since the apparatus according to the present invention can rapidly generate a clock signal synchronized with the input horizontal frequency, when the horizontal frequency of the input video signal is changed the video circuit 12 can immediately process the input video signals and the CRT 14 can rapidly display the image.

While the present invention has been described as applied to a computer monitor using a CRT as described above, it is evident that many alternatives will become apparent to those skilled in the art in light of the foregoing description. For example, the present invention may be applied to computer monitors using other display means. Also, while the input video signals are the three primary color signals red R, green G, and blue B as described above, the present invention may be applied to monitors to which video signals of other systems are the input. Further, the present invention may be applied to a so called sync-on-green system in which the respective horizontal and vertical synchronization signals are superposed on the green video signal G. Also, the proper preset values can be changed to different steps depending upon the arrangement of the VCO to be employed, the range of the variable frequency, or other variables.

According to the display apparatus of the present invention, the initial frequency of a Voltage Control Oscillator ("VCO") is set based on stored preset data optimized to a wide range of input frequencies. This aspect makes the VCO frequency approximately the input frequency a the outset, reducing the difference between the input and clock frequencies, thereby reducing the synchronization time of the apparatus and allowing for faster processing and displaying of an image synchronized with the input horizontal frequency on a display screen of the video display apparatus.

Thus, it is apparent that in accordance with the present invention an apparatus and method that fully satisfy the objectives, aims, and advantages is set forth above. While the invention has been described in conjunction with specific embodiments, it is evident that many alternatives, modifications, permutations, and variations will become apparent to those skilled in the art in light of the foregoing description. Accordingly, it is intended that the present invention embrace all such alternatives, modifications and variations as fall within the scope of the appended claims.

## Claims

1. An apparatus for controlling a horizontal oscillation in a multiscan video display apparatus comprising:
horizontal oscillator means for generating a horizontal oscillation;
input terminal means for receiving input video signals having any one of a plurality of horizontal synchronization signals of different frequencies;
memory means for storing a plurality of preset frequency control data corresponding to each of said plurality of horizontal synchronization signals of different frequencies;
detecting means for detecting a frequency of the horizontal synchronization signals; and
supplying means for supplying one of said plurality of preset frequency control data corresponding to said frequency detected by said detecting means to said horizontal oscillator means, thereby generating said horizontal oscillation.

2. The apparatus according to claim 1, in which said detecting means further includes means for detecting a frequency change of said horizontal synchronization signal, said supplying means supplying one of said plurality of preset frequency control data corresponding to said frequency change detected by said detecting means to said horizontal oscillator means, thereby changing said horizontal oscillation.

3. The apparatus according to claim 2, further comprising fine adjusting means for fine adjusting the frequency of said horizontal oscillator means after said one of said plurality of preset frequency control data is supplied to said horizontal oscillator means.

4. The apparatus according to claim 3, in which, in use, said fine adjusting means calculates an offset based on a difference between the frequency of said horizontal synchronization signal and said horizontal oscillation, and modifies said one of said plurality of preset frequency control data based on said offset, thereby fine adjusting said horizontal oscillation.

5. The apparatus according to claim 3 or 4, in which, in use, said fine adjusting means calculates an offset based on a frequency difference between said horizontal oscillation and said horizontal synchronization signal when said frequency difference is outside a predetermined range, or from the phase difference between said horizontal oscillation and said horizontal synchronization signal when said frequency difference is within said predetermined range; and modifies said one of said plurality of preset frequency control data based on said offset, thereby fine adjusting said horizontal oscillation.

6. The apparatus according to claim 3, 4 or 5 in which said fine adjusting means includes a phase lock loop.

7. A method for controlling a frequency of a horizontal oscillator in a multiscan display apparatus having as input video signals having any one of a plurality of horizontal synchronization signals of different frequencies comprising the steps of:
storing a plurality of preset frequency control data corresponding to each of said plurality of horizontal synchronization signals of different frequencies;
detecting a change in frequency of said horizontal synchronization signal; and
supplying the preset frequency control data corresponding to said changed frequency to said horizontal oscillator, thereby controlling the frequency of said horizontal oscillator.

8. The method according to claim 7, further comprising the steps of:
detecting a difference in frequency between an output frequency of said horizontal oscillator and said horizontal synchronization signal;
calculating an offset based on a frequency difference between said output of said horizontal oscillator and said horizontal synchronization signal when said frequency difference is outside a predetermined range, or from the phase difference between said output of said horizontal oscillator and said horizontal synchronization signal when said frequency difference is within said predetermined range; and
modifying the preset frequency control data based on said offset.
